# EUROPEAN PATENT SPECIFICATION

(11) **EP 2 375 023 B1**
(45) Date of publication and mention of the grant of the patent: **19.09.2012**
(21) Application number: 10159228.5
(22) Date of filing: 07.04.2010
(51) Int. Cl.: F01N 3/20, F01N 9/00

(54) **Method of controlling urea dosing in an exhaust system of a vehicle**
Verfahren zur Harnstoffdosierung in einem Abgassystem eines Fahrzeugs
Procédé de dosage d'urée dans un système d'échappement d'un véhicule

(43) Date of publication of application: 12.10.2011
(73) Proprietor: Ford Global Technologies, LLC, Dearborn, MI 48126 (US)
(72) Inventor: Balenovic, Mario, 5582 AV Waalre (NL); Carberry, Brendan, 52074 Aachen (DE); Dubkov, Alexei, 52072 Aachen (DE); Harmsen, Jan, 6369 BX Simpelveld (NL); Reichert, Martina, 50679 Köln (DE)
(74) Representative: Drömer, Hans-Carsten

(56) References cited:
- EP-A1- 1 676 987
- EP-A1- 2 133 527
- DE-A1-102005 063 081
- GB-A- 2 403 165
- JP-A- 2003 120 279

## Description

The present invention relates to a method of controlling urea dosing in an exhaust system of a vehicle, wherein said urea is injected into an exhaust gas flow in said exhaust system for selective catalytic reduction.

Urea-water solutions are well known to be used as reductants injected into the automotive exhaust systems in order to react over selective catalytic reduction catalyst (= SCR catalyst) with nitrogen oxides (= NOx) in order to decrease automotive NOx emissions. More particular, urea solution is injected into the exhaust by either air-assisted or hydraulic injection hardware, wherein the amount of injection is calculated using a control strategy depending on the exhaust gas mass flow and temperature, the content of nitrogen oxides in the exhaust gas and properties of the SCR catalyst (such as conversion efficiency versus catalyst conditions including amount of stored ammonia, ageing status, etc.).

A problem arising in practise is that, if the urea solution is dosed in a significant amount that may be necessary for reaction with the calculated NOx amount, there is a risk or possibility of urea-derived deposits formation on all surfaces of the exhaust system downstream of the urea injector. These deposits may cause an insufficient urea usage and/or a plugging of the SCR catalyst resulting in malfunctions of the exhaust systems (like high backpressure clogging etc.).

It is therefore desirable to avoid or minimize such possible negative effects by detecting urea solution amounts that can cause urea-derived deposit formation by a control system during vehicle operation, and to provide effective methods to avoid urea-derived deposit formation.

WO 2009/112129 A1 discloses a metering system for injecting a urea solution into the exhaust gas flow of an internal combustion engine for selective catalytic reduction and a method for controlling the injecting of a urea solution by means of compressed air. The metering system can be connected to a urea solution tank, wherefrom urea solution can be removed. The metering system comprises at least one nozzle through which the urea solution can be injected into the exhaust gas flow by means of compressed air. The metering system also comprises an air valve by means of which the pressure and/or the quantity of air and/or the valve opening times of the compressed air supply can be regulated. A sensor for measuring the pressure and/or the quantity of air is disposed in the compressed air supply between the air valve and the nozzle, so that the quantity of compressed air fed in for atomizing the urea solution is controlled and lowered to the minimum air quantity required at a given moment, depending on the operating parameters of exhaust gas temperature and exhaust gas mass flow.

GB 2 403 165 A discloses a metering system for injecting a urea solution based on a pre-established map.

It is an object of the present invention to provide a method of controlling the urea dosing in an exhaust system of a vehicle, wherein urea-derived deposit formation may be at least substantially reduced.

A method of controlling urea dosing in an exhaust system of a vehicle, wherein said urea is injected into an exhaust gas flow in said exhaust system for selective catalytic reduction, comprises the following steps:
- establishing an allocation rule for a group of parameters that characterize an operating condition in said exhaust system, and for a value of an index (UDSI) suited to characterize an Urea Deposition Severity in said exhaust system;
- determining a current value combination of said group of parameters for a current operation condition of said exhaust system;
- based on said allocation rule, allocating a current value combination for said group of parameters for a current operation condition of said exhaust system, to a current value of said index (UDSI); and
- controlling urea dosing quantity in said exhaust system based on said current value of said index (UDSI).

The present invention is, inter alia, based on the concept to monitor the severity of the urea-derived deposit formation based on an appropriate Urea Deposition Severity Index (UDSI) against exhaust gas conditions and exhaust system geometry, and to use this index for correcting (i.e. restricting, if necessary) the urea dosing (i.e. the injected urea solution amount) such that formation of the urea-originated deposits on inner surfaces of the exhaust system components, especially between the urea injector and inlet into SCR catalyst, is reduced or even avoided or minimized.

According to an embodiment, said group of parameters comprises the exhaust gas mass flow rate, the urea dosing rate and/or a characteristic temperature in said exhaust system. Said characteristic temperature may, in particular, be the exhaust temperature (T_{char}) between the urea injector and the SCR catalyst.

According to an embodiment, said group of parameters comprises one parameter depending on the ratio (UDR/EGMFR) between the urea dosing rate (UDR) and the exhaust gas mass flow rate (EGMFR). In this embodiment, the present invention involves the concept to combine two variables - urea dosing rate and exhaust gas mass flow rate - into a new variable (UDR/EGMFR), which allows to have the Urea Deposition Severity Index (UDSI) mapped against all principal parameters of the system such as exhaust gas mass flow rate, urea dosing rate, and characteristic temperature, using only one map. This concept is based on the consideration that, on the one hand, a direct evaluation or usage of the measured variables in controlling or avoiding deposits formation would require a number of maps (i.e. not only one map) for different dosing rates which would not be convenient to be used in controlling the urea dosing in the exhaust system. In contrast thereto, as a result of the present invention, the obtained map can be used by the control strategy as a map or "look-up table" of the UDSI value (= Urea Deposit Severity Index) versus characteristic temperature (i.e., T upstream of SCR catalyst) and the above mentioned combined variable (based on the ratio UDR/EGMFR).

According to an embodiment, said group of parameters comprises only two parameters, wherein a first parameter depends on the ratio (UDR/EGMFR) between the urea dosing rate (UDR) and the exhaust gas mass flow rate (EGMFR), and wherein the other parameter is a characteristic temperature in said exhaust system.

According to an embodiment, said index (UDSI) suited to characterize an Urea Deposition Severity in said exhaust system is defined based on the percentage of the deposits initially formed during urea dosing that is not removed within a predetermined period after stopping urea dosing as explained further below in more detail.

According to an embodiment, said allocation rule is established as a look-up table.

According to an embodiment, said step of controlling urea dosing in said exhaust system comprises reducing the urea dosing rate (UDR) if said current value of said index (UDSI) exceeds a predetermined threshold value.

Accordingly, in an exemplary embodiment of the invention, a possible use of the map according to the present invention in a control strategy can be as follows: Operating conditions, in which probability of the deposit formation and Non-removal of these deposits is high (e.g. if more than 50 % of the initially formed deposit retains after 5 minutes) may be those which are characterized by the UDSI value of 3 and 4. If the engine/process control system detects that UDSI is 3 or higher, it will restrict the allowed amount of the urea solution down to the value, for which the UDSI will be equal or less than 2.

With other words, based upon the Urea Deposition Severity analysis explained above, a method of controlling urea dosing in an exhaust system according to the invention may result in a maximum allowed dosing rate of the urea solution with which the formation of the urea-derived deposits in the exhaust system is either avoided, and/or minimized so that even if formed, these deposits can be easily decomposed in the exhaust. In said Urea Deposition Severity analysis, among the physical factors affecting deposit formation, the main factors are assumed to be the exhaust gas mass flow rate (EGMFR), the urea-water solution mass flow rate (or dosing rate, UDR), the exhaust geometry especially in between urea injector and SCR catalyst, and a characteristic exhaust temperature (T_{char}), in particular between the urea injector and the SCR catalyst. These factors have to be taken into account, and are according to the present invention combined in a simple way into new variable or map that can be relatively simply implemented within the control strategy of the operation of the urea SCR system.

In particular, an approach according the present invention may comprise the following steps:
a) Developing experimental matrix that preferably covers a wide range of changing of the above-mentioned parameters (i.e. EGMFR, UDR, T_{char})
b) Developing a hardware representative for the application of interest (engine with the exhaust system etc.)
c) Running deposition experiments for the developed matrix
d) Evaluating deposition either directly against measured variables, or against new variables obtained by combining measured variables into new dimension or dimensionless variables
e) Constructing 2D-table (map) containing deposition-related characteristic plotted against two key directly measured or new combined variables.

The constructed 2D-table or map can be easily used within the control strategy and allows to restrict urea dosing rate (UDR) based on the mapped deposition-related characteristic and request for the UDR coming from the SCR system control modules.

The invention also relates to a controlling arrangement for controlling urea dosing in an exhaust system of a vehicle, wherein said controlling arrangement is configured to perform a method according to any of the preceding claims.

Further aspects of the present invention can be gathered from the following description and the appended claims.

The invention is described in more detail with reference to the following detailed description and based upon preferred embodiments shown in the drawings, in which:
Figure 1 is a diagram of the results of an exemplarily series of measurements (data array) plotted according to the present invention; and
Figure 2 illustrates a possible allocation rule that is adapted to the diagram of Figure 1 according to an embodiment of the present invention.

First, in order to establish an allocation rule, a series of measurements has been performed by developing an experimental matrix covering a wide range of changing of the parameters exhaust gas mass flow rate (EGMFR), dosing rate (UDR) and characteristic temperature (T_{char}) by running deposition experiments for the developed matrix in an engine with an exhaust system. As characteristic temperature, the exhaust gas temperature upstream of the SCR catalyst was used.

It was found that for characteristic temperatures (T_{char}) above 350 °C, no urea-originated deposits were found in the exhaust system (within whole ranges of exhaust gas mass flow) irrespective of the urea dosing rate up to the maximal dosing rate according to the urea injector design. Furthermore, within the control system for SCR technology, also a low-temperature limit for the operation for SCR system exists. This limit was also taken into account during development of the experimental conditions matrix. However, experimental conditions were extended beyond this low-temperature limit, down to values of the characteristic temperature of T_{char} ∼ 150 °C.

For a complete experimental matrix the following ranges for key parameters have been chosen: EGMFR = [59 ... 369] kg/h; UDR = [0 ...304] mg/s; T_{char} = [150 ... 400] °C.

The UDSI value can be defined, just as an example and without limitation of the invention, as the percentage of the deposits initially formed during urea dosing that is not removed within 5 minutes in given conditions after stopping urea dosing. More specifically, quantitative values can be given as defined in Table 1:

**Table 1:**

| **UDSI-value** | **Criterion** |
|---|---|
| 0 | Deposits were not observed at all, or 100 % of the initially formed deposits were removed in 5 minutes after stopping urea dosing |
| 1 | 0-25 % of the initially formed deposits were not re-moved in 5 min after stopping urea dosing |
| 2 | 25-50 % of the initially formed deposits were not re-moved in 5 min after stopping urea dosing |
| 3 | 50-75 % of the initially formed deposits were not re-moved in 5 min after stopping urea dosing |
| 4 | 75-100 % of the initially formed deposits were not removed in 5 min after stopping urea dosing |

A general procedure for the experiments was chosen as follows: For Engine Speeds from 3.000 rpm down to 1.000 rpm (in steps of 500 rpm), characteristic temperatures T_{char} = 400 °C down to 150 °C (in steps of 50 °C), with stabilized engine and exhaust parameters and for the values of dosing rates 0, 5, 10, 20, 50, 100, 200 and 300 mg/s, the following steps were performed:
- Switch dosing on
- Keep on dosing to observe dosing-on features
- Turn dosing off
- Observe dosing-off features
- End the current dosing rate
- End the current T_{char}-point
- End the current engine speed

For example, one of the conducted experiments was started for an engine speed of 3.000 rpm and for an engine load sufficient to provide a characteristic temperature (e.g. the exhaust temperature upstream of the SCR catalyst) of 400 °C. Then, in this engine operating (Speed/Load) point, different urea dosing rates were applied (i.e. urea dosing was first switched on, kept for period of time sufficient to observe features, and then switched back off) and the status of the deposition was monitored (in terms of rate of appearance/disappearance, reversibility, stability etc.) from low to high urea dosing rates.

After performing this experiment, the quartz tube was washed (if necessary) and dried, and then the engine load was changed to a lower value in order to provide a characteristic temperature which was 50 °C lower. After achieving the minimal scheduled T_{char} of roughly 150 °C, the same sequence of experiments was carried out at next engine speed and so on.

Table 2 shows the results of an exemplary series of measurements which were performed and analyzed as explained above.

**Table 2:**

| **Meas. Point No.** | **Engine Speed [RPM]** | **T_{upstream SCR} [°C]** | **Urea Dosing Rate [mg/sec]** | **UDSI value** |
|---|---|---|---|---|
| 1 | 1000 | 260 | 6.8 | 0 |
| 2 | 1000 | 234 | 6.8 | 1 |
| 3 | 1000 | 204 | 6.8 | 1 |
| 4 | 1000 | 178 | 6.8 | 2 |
| 5 | 2000 | 390 | 6.8 | 0 |
| 6 | 2000 | 350 | 6.8 | 0 |
| 7 | 2000 | 302 | 6.8 | 0 |
| 8 | 2000 | 252 | 6.8 | 0 |
| 9 | 2000 | 206 | 6.8 | 1 |
| 10 | 2000 | 173 | 6.8 | 1 |
| 11 | 2000 | 154 | 6.8 | 2 |
| 12 | 2500 | 344 | 6.8 | 0 |
| 13 | 2500 | 304 | 6.8 | 0 |
| 14 | 2500 | 253 | 6.8 | 0 |
| 15 | 2500 | 204 | 6.8 | 1 |
| 16 | 2500 | 176 | 6.8 | 1 |
| 17 | 2500 | 154 | 6.8 | 2 |
| 18 | 3000 | 351 | 6.8 | 0 |
| 19 | 3000 | 304 | 6.8 | 0 |
| 20 | 3000 | 255 | 6.8 | 0 |
| 21 | 3000 | 209 | 6.8 | 0 |
| 22 | 3000 | 177 | 6.8 | 1 |
| 23 | 1500 | 395 | 10.3 | 0 |
| 24 | 1500 | 359 | 10.3 | 0 |
| 25 | 1500 | 310 | 10.3 | 0 |
| 26 | 1500 | 265 | 10.3 | 0 |
| 27 | 1500 | 174 | 10.3 | 1 |
| 28 | 1500 | 148 | 10.3 | 3 |
| ... | ... | ... | ... | ... |

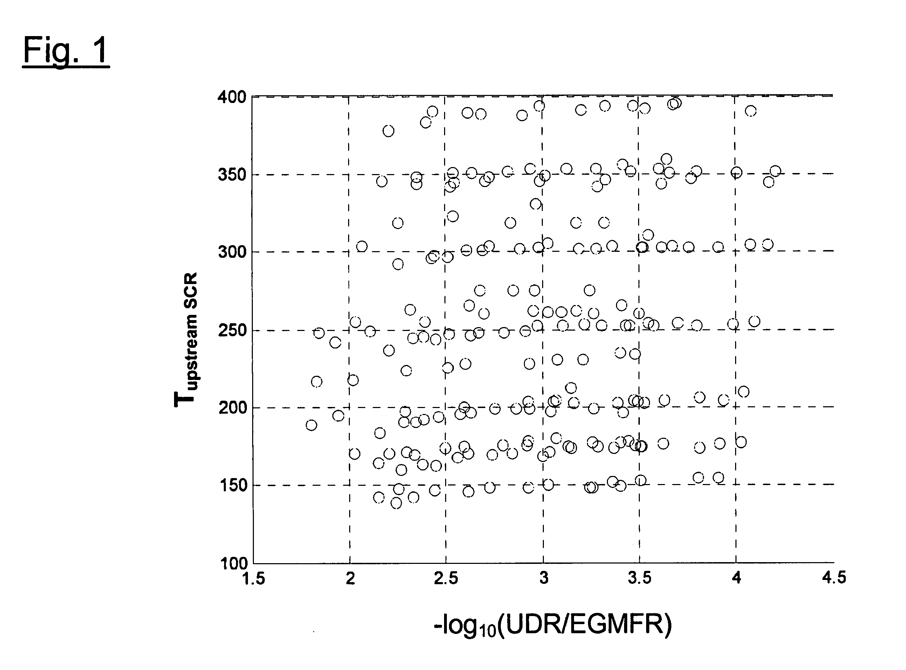

These results are used according to the invention in a dosing strategy to control (in particular to at least substantially reduce) the urea dosing of an exhaust system of a vehicle. To this, the two variables urea dosing rate (UDR) and exhaust gas mass flow rate (EGMFR) were combined in a new variable defined as the ratio UDR/EGMFR, which allowed to have the Urea Deposition Severity Index (UDSI) (defined as explained above) mapped against all principal parameters of the system such as exhaust gas mass flow rate, urea dosing rate, and characteristic temperature using only one map as illustrated in Fig. 1.

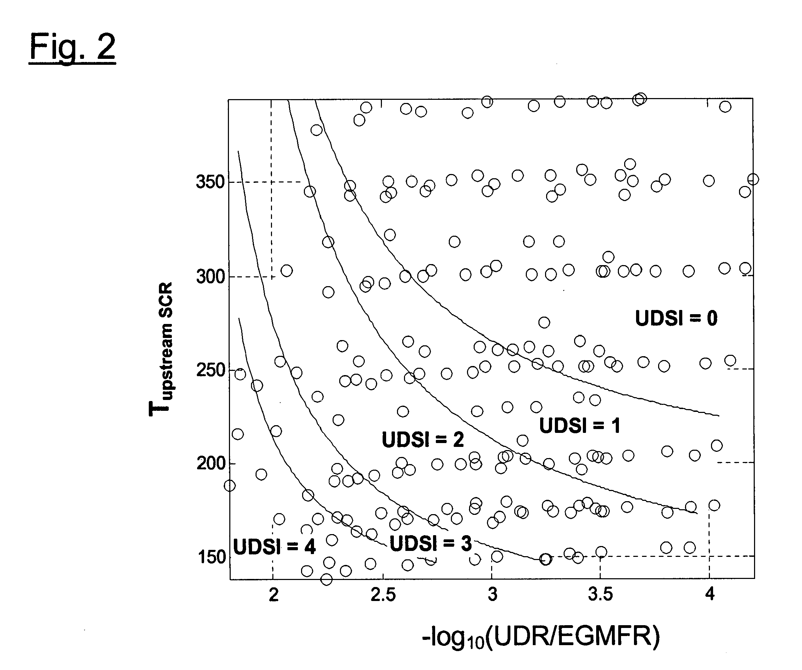

In Fig. 2, five different regions have been separated in this 2D-map depending on the respective value of the Urea Deposition Severity Index (i.e. values from UDSI = 0 to UDSO = 4). A possible use of the map according to the present invention in a control strategy can be as follows: Operating conditions, in which probability of the deposit formation and not removal is high (e.g. if more than 50% of the initially formed deposit retains after 5 minutes) may be those which are characterized by the UDSI value of 3 and 4. If the engine/process control system detects that UDSI has a value of 3 or higher, it will restrict the allowed amount of the urea solution down to the value, for which the UDSI will be equal or less than 2.

The above description of preferred embodiments has been given by way of example. A person skilled in the art will, however, not only understand the present invention and its advantages, but will also find suitable modifications thereof. Therefore, the present invention is intended to cover all such changes and modifications as far as falling within the scope of the invention as defined in the appended claims.

## Claims

1. A method of controlling urea dosing in an exhaust system of a vehicle wherein said urea is injected into an exhaust gas flow in said exhaust system for selective catalytic reduction,
**characterized in that**
said method comprising the following steps:
a) establishing an allocation rule for a group of parameters that characterize an operating condition in said exhaust system, and for a value of an index (UDSI) suited to characterize an Urea Deposition Severity in said exhaust system;
b) determining a current value combination for said group of parameters for a current operation condition of said exhaust system;
c) based on said allocation rule, allocating a current value combination for said group of parameters for a current operation condition of said exhaust system, to a current value of said index (UDSI); and
d) based on said current value of said index (UDSI), controlling urea dosing in said exhaust system.

2. The method according to claim 1,
**characterized in that**
said group of parameters comprises the exhaust gas mass flow rate, the urea dosing rate and/or a characteristic temperature in said exhaust system.

3. The method according to claim 1 or 2,
**characterized in that**
said group of parameters comprises one parameter depending on the ratio (UDR/EGMFR) between the urea dosing rate (UDR) and the exhaust gas mass flow rate (EGMFR).

4. The method according to any of the claims 1-3,
**characterized in that**
said group of parameters comprises only two parameters, wherein a first parameter depends on the ratio (UDR/EGMFR) between the urea dosing rate (UDR) and the exhaust gas mass flow rate (EGMFR), and wherein the other parameter is a characteristic temperature in said exhaust system.

5. The method according to any of the claims 2-4,
**characterized in that**
said exhaust system comprises a selective catalytic reduction catalyst (= SCR catalyst), wherein said characteristic temperature is a temperature of the exhaust gas upstream of the SCR catalyst.

6. The method according to any of the preceding claims,
**characterized in that**
said index (UDSI) suited to characterize an Urea Deposition Severity in said exhaust system is defined based on the percentage of the deposits initially formed during urea dosing that is not removed within a predetermined period after stopping urea dosing.

7. The method according to any of the preceding claims,
**characterized in that**
said allocation rule is established as a look-up table.

8. The method according to any of the preceding claims,
**characterized in that**
said step d) of controlling urea dosing in said exhaust system comprises reducing the urea dosing rate (UDR) if said current value of said index (UDSI) exceeds a predetermined threshold value.

9. A controlling arrangement for controlling urea dosing in an exhaust system of a vehicle,
**characterized in that**
said controlling arrangement is configured to perform a method according to anyone of the preceding claims.

## Patentansprüche

1. Verfahren zur Steuerung von Harnstoffdosierung in einem Abgassystem eines Fahrzeugs, wobei der Harnstoff in einen Abgasstrom in dem Abgassystem für selektive katalytische Reduktion eingespritzt wird,
**dadurch gekennzeichnet, dass**
das Verfahren die folgenden Schritte umfasst:
a) Erstellen einer Zuordnungsregel für eine Gruppe von Parametern, die einen Betriebszustand in dem Abgassystem charakterisieren, und für einen Wert eines Indexes (UDSI), der zur Charakterisierung einer Stärke der Harnstoffablagerung (UDSI - Urea Deposition Severity) in dem Abgassystem geeignet ist;
b) Bestimmen einer Istwertkombination für die Gruppe von Parametern für einen Istbetriebszustand des Abgassystems;
c) basierend auf der Zuordnungsregel, Zuordnen einer Istwertkombination für die Gruppe von Parametern für einen Istwertzustand des Abgassystems zu einem Istwert des Indexes (UDSI); und
d) basierend auf dem Istwert des Indexes (UDSI) Steuern der Harnstoffdosierung in dem Abgassystem.

2. Verfahren nach Anspruch 1,
**dadurch gekennzeichnet, dass**
die Gruppe von Parametern den Abgasmassendurchsatz, die Harnstoffdosierrate und/oder eine charakteristische Temperatur in dem Abgassystem umfasst.

3. Verfahren nach Anspruch 1 oder 2,
**dadurch gekennzeichnet, dass**
die Gruppe von Parametern einen Parameter umfasst, der von dem Verhältnis (UDR/EGMFR) zwischen der Harnstoffdosierrate (UDR - urea dosing rate) und dem Abgasmassendurchsatz (EGMFR - exhaust gas mass flow rate) abhängig ist.

4. Verfahren nach einem der Ansprüche 1 - 3,
**dadurch gekennzeichnet, dass**
die Gruppe von Parametern nur zwei Parameter umfasst, wobei ein erster Parameter von dem Verhältnis (UDR/EGMFR) zwischen der Harnstoffdosierrate (UDR) und dem Abgasmassendurchsatz (EGMFR) abhängig ist und wobei der andere Parameter eine charakteristische Temperatur in dem Abgassystem ist.

5. Verfahren nach einem der Ansprüche 2 - 4,
**dadurch gekennzeichnet, dass**
das Abgassystem einen Katalysator zur selektiven katalytischen Reduktion (=SCR-Katalysator, SCR - selective catalytic reduction) umfasst, wobei die charakteristische Temperatur eine Temperatur des Abgases stromaufwärts des SCR-Katalysators ist.

6. Verfahren nach einem der vorhergehenden Ansprüche,
**dadurch gekennzeichnet, dass**
der Index (UDSI), der zur Charakterisierung einer Stärke der Harnstoffablagerung in dem Abgassystem geeignet ist, auf Grundlage des Prozentanteils der anfangs während der Harnstoffdosierung gebildeten Ablagerungen, der innerhalb eines vordefinierten Zeitraums nach Anhalten der Harnstoffdosierung nicht entfernt wird, definiert wird.

7. Verfahren nach einem der vorhergehenden Ansprüche,
**dadurch gekennzeichnet, dass**
die Zuordnungsregel als eine Nachschlagetabelle erstellt wird.

8. Verfahren nach einem der vorhergehenden Ansprüche,
**dadurch gekennzeichnet, dass**
der Schritt d) des Steuerns der Harnstoffdosierung in dem Abgassystem Reduzieren der Harnstoffdosierrate (UDR), wenn der Istwert des Indexes (UDSI) einen vordefinierten Schwellwert übersteigt, umfasst.

9. Steueranordnung zur Steuerung der Harnstoffdosierung in einem Abgassystem eines Fahrzeugs,
**dadurch gekennzeichnet, dass**
die Steueranordnung dazu konfiguriert ist, ein Verfahren nach einem der vorhergehenden Ansprüche durchzuführen.

## Revendications

1. Procédé de dosage d'urée utilisable dans un système d'échappement d'un véhicule, ladite urée étant injectée dans un flux de gaz d'échappement circulant dans ledit système d'échappement afin de réaliser une réduction catalytique sélective,
**caractérisé en ce que**
ledit procédé comprend les étapes suivantes :
a) établir une règle d'allocation applicable à un groupe de paramètres qui caractérisent une condition de fonctionnement dans ledit système d'échappement, et à une valeur d'un indice de sévérité d'un dépôt d'urée (UDSI, abréviation de l'anglais Urea Deposition Severity Index) qui caractérise une sévérité d'un dépôt d'urée dans ledit système d'échappement ;
b) déterminer une combinaison de valeurs actuelles pour ledit groupe de paramètres pour une condition actuelle de fonctionnement dudit système d'échappement ;
c) en fonction de ladite règle d'allocation, attribuer une combinaison actuelle de valeurs pour ledit groupe de paramètres pour une condition actuelle de fonctionnement dudit système d'échappement, à une valeur actuelle dudit indice de sévérité du dépôt d'urée (UDSI) ; et
d) en fonction de ladite valeur actuelle dudit indice de sévérité du dépôt d'urée (UDSI), régler le dosage d'urée injecté dans ledit système d'échappement.

2. Procédé selon la revendication 1,
**caractérisé en ce que**
ledit groupe de paramètres comprend le taux de débit massique de gaz d'échappement, le taux de dosage d'urée et/ou une température caractéristique dans ledit système d'échappement.

3. Procédé selon la revendication 1 ou 2,
**caractérisé en ce que**
ledit groupe de paramètres comprend un paramètre qui est fonction du rapport entre le taux de dosage d'urée (UDR, abréviation de l'anglais Urea Dosing Rate) et le taux de débit massique de gaz d'échappement (EGMFR, abréviation de l'anglais Exhaust Gas Mass Flow Rate), (le rapport UDR/EGMFR).

4. Procédé selon l'une quelconque des revendications 1 à 3,
**caractérisé en ce que**
ledit groupe de paramètres comprend seulement deux paramètres, un premier paramètre étant fonction du rapport (UDR/EGMFR) entre le taux de dosage d'urée (UDR) et le taux de débit massique de gaz d'échappement (EGMFR), et l'autre paramètre étant une température caractéristique dans ledit système d'échappement.

5. Procédé selon l'une quelconque des revendications 2 à 4,
**caractérisé en ce que**
ledit système d'échappement comprend un catalyseur à réduction catalytique sélective (catalyseur SCR, abréviation de Selective Catalytic Reduction), ladite température caractéristique étant une température de gaz d'échappement en amont du catalyseur SCR.

6. Procédé selon l'une quelconque des revendications précédentes
**caractérisé en ce que**
ledit indice (UDSI) adapté à caractériser une sévérité d'un dépôt d'urée dans ledit système d'échappement est défini en fonction du pourcentage de dépôt formé initialement durant le dosage d'urée qui n'a pas été éliminé dans une période prédéterminée après l'arrêt du dosage d'urée.

7. Procédé selon l'une quelconque des revendications précédentes
**caractérisé en ce que**
ladite règle d'allocation est établie en tant que table de consultation.

8. Procédé selon l'une quelconque des revendications précédentes
**caractérisé en ce que**
ladite étape d) de réglage du dosage d'urée dans ledit système d'échappement comprend la réduction du taux de dosage d'urée (UDR) si ladite valeur actuelle dudit indice (UDSI) dépasse une valeur de seuil prédéterminée.

9. Procédé de dosage d'urée utilisable dans un système d'échappement de véhicule,
**caractérisé en ce que**
ledit système de dosage est configuré de manière à pouvoir appliquer un procédé selon l'une quelconque des revendications précédentes.
